# EUROPÄISCHE PATENTSCHRIFT

(11) **EP 1 091 206 B1**
(45) Veröffentlichungstag und Bekanntmachung des Hinweises auf die Patenterteilung: **12.05.2004**
(21) Anmeldenummer: 00121207.5
(22) Anmeldetag: 29.09.2000
(51) Int. Cl.: G01N 21/57, G01N 21/84

(54) **Verfahren und Vorrichtung zur optischen Messung von Überzugsschichten**
Method and apparatus for the optical measurement of coatings
Méthode et appareil pour la mesure optique des revêtements

(30) Priorität: 09.10.1999 DE 19948752
(43) Veröffentlichungstag der Anmeldung: 11.04.2001
(73) Patentinhaber: E.I. DU PONT DE NEMOURS AND COMPANY, Wilmington, Delaware 19898 (US)
(72) Erfinder: Voyé, Christian, 58285 Gevelsberg (DE); Rupieper, Paul, 42111 Wuppertal (DE); Cramm, Joachim, 42327 Wuppertal (DE)
(74) Vertreter: Gille Hrabal Struck Neidlein Prop Roos

(56) Entgegenhaltungen:
- DE-A- 2 525 701
- DE-A- 3 638 932
- US-A- 5 590 560

## Beschreibung

Die vorliegende Erfindung betrifft ein Verfahren zur berührungsfreien Messung optischer Parameter an aus flüssigen Überzugsmitteln aufgebrachten Überzugsschichten sowie eine Vorrichtung zur Durchführung des Verfahrens.

In der Lackindustrie ist es beispielsweise bei der Produktion, Standardisierung und Entwicklung von Lacken erforderlich, an den Lacken optische Messungen, insbesondere farbmetrische Messungen durchzuführen, beispielsweise um Aussagen zu erhalten, ob die Lacke den geforderten optischen Parametern, z.B. der geforderten Farbstärke, entsprechen. Erforderliche Korrekturschritte können sich dann anschließen. Beispielsweise bei der Herstellung pigmentierter Überzugsmittel sind Tönschritte zur exakten Einstellung des Soll-Farbtons notwendig. Nach jedem Tönschritt muß der Lack auf ein Prüfblech lackiert und getrocknet oder gehärtet werden. Das so erhaltene "Ist-Blech" kann danach mit einem "Soll-Blech" verglichen werden. Im Fall von Unifarbtönen kann es außerdem notwendig sein zunächst von jedem Farbton eine Weißlackabmischung herzustellen. Bei der Standardisierung von Pigmentpasten kommt als zusätzlicher Arbeitsschritt noch das Auflacken mit entsprechenden Bindemitteln vor der Applikation hinzu. Der Arbeits-, Zeit- und Kostenaufwand ist erheblich.

Prinzipiell können optische Messungen statt an applizierten und getrockneten bzw. gehärteten Lackschichten auch an Naßlacken erfolgen, wenn man die Korrelation von optischem Meßergebnis am Naßlack und an der applizierten und getrockneten bzw. gehärteten Lackschicht kennt. Wann immer möglich besteht daher das Bestreben optische Messungen an Naßlacken durchzuführen und es sind Methoden zur Farbmessung an Naßlacken entwickelt worden. Beispielsweise sind Meßzellen zur Naßlackmessung bekannt. Es handelt sich hierbei beispielsweise um Meßküvetten aus Glas, die vor der Meßöffnung eines Farbmeßgerätes plaziert werden können. Nachteil dieser einfachen Meßzellen ist, daß die Genauigkeit der mit ihnen erhaltenen Meßergebnisse unbefriedigend ist, beispielsweise hervorgerufen durch rasches Absetzen des Lackes in der Küvette oder durch den Einfluß des Zwischenmediums Glas, beispielsweise auf Grund physikalischer Wechselwirkungen. Für die Farbmessung an Effektlacken ist das Verfahren vollkommen ungeeignet.

In der DE-A-25 25 701 wird ein Verfahren zur Farbmessung an flüssigen Lacken beschrieben. In diesem Verfahren wird ein kontinuierlicher Film aus dem zu untersuchenden Lack gebildet und ein Abschnitt dieses Films farbmetrisch gemessen. Der Lackfilm kann dabei ein mit einer Unterlage wandernder Film oder ein über eine Unterlage mit laminarer Strömung hinweg wandernder Film sein. Im ersten Fall handelt es sich bei der Unterlage um eine um eine horizontale Achse drehbare Meßscheibe, im zweiten Fall um einen plattenförmigen Körper mit etwa senkrecht stehender Oberfläche, an der der Lack hinunterläuft und unten abtropft. In beiden Fällen wird der Lack mittels eines Gießkastens mit Austrittspalt auf die jeweilige Unterlage aufgebracht. Nachteilig an diesem Verfahren ist im Falle der Verwendung einer drehbaren Meßscheibe, daß mit einer akzeptablen Scheibengröße nur dann gearbeitet werden kann, wenn Farbmeßgeräte eingesetzt werden, die eine seitlich am Gehäuse angeordnete Meßöffnung aufweisen. Bei Farbmeßgeräten mit mittig angeordneten Meßöffnungen müssen extrem große Scheiben eingesetzt werden. Nachteil der Farbmessungen ist, daß das Meßergebnis insbesondere im Falle von Effektlacken bei ein und derselben Naßläckprobe je nach Meßort auf der rotierenden Scheibe unterschiedlich ausfällt. Bei Verwendung des plattenförmigen Körpers mit etwa senkrecht stehender Oberfläche kann nur mit Naßlackschichtdicken oberhalb der Ablaufgrenze gearbeitet werden. Insbesondere die Farbmessung an Effektlacken ist damit nicht sinnvoll durchführbar.

In der DE 36 38 932 C2 wird ein on-line Verfahren zur kontinuierlichen Bestimmung der Beschichtungsmenge von Silikonen auf einer fortlaufenden zu beschichtenden Bahn aus Papier oder Kunststoff beschrieben. Dabei wird der Glanz vor und nach der Beschichtung mit zwei getrennten Meßeinheiten bestimmt und daraus die Auftragsmenge bestimmt.

In der US-A-5 590 560 werden ein Verfahren und eine Vorrichtung zur Bestimmung der Viskosität, Dicke, Oberflächenspannung und Oberflächen-Streckungselastizität eines flüssigen Films beschrieben. Dabei wird eine Überzugsschicht aus einem flüssigen Film auf die äußere Oberfläche eines über eine Antriebsrolle und Spannrollen gespannten und bewegten Trägerbandes aufgebracht, wonach die Messungen an der Überzugsschicht an einer planen, nicht gekrümmten Stelle auf der Außenseite des Trägerbandes durchgeführt werden.

Aufgabe der Erfindung ist es, ein verbessertes Verfahren zur berührungsfreien Messung optischer Parameter an aus flüssigen Überzugsmitteln aufgebrachten Überzugsschichten bereitzustellen. Das Verfahren soll es ermöglichen, vielfältige technische Fragestellungen zu beantworten und soll daher hinsichtlich seiner praktischen Durchführung möglichst viele Freiheitsgrade aufweisen, d.h. es soll möglichst universell anwendbar sein. Mit dem Verfahren sollen insbesondere auch die vorstehend beschriebenen Reproduzierbarkeitsmängel vermieden werden können.
Die Aufgabe kann gelöst werden, wenn eine Überzugsschicht aus einem flüssigen Überzugsmittel auf einem über eine Antriebsrolle und eine oder mehrere Spannrollen gespannten, in sich geschlossenen Trägerband erzeugt wird und an dieser Überzugsschicht eine berührungsfreie optische Messung durchgeführt wird.
Gegenstand der Erfindung ist daher ein Verfahren zur berührungsfreien Messung optischer Parameter an einer planen, aus einem flüssigen Überzugsmittel oder einer flüssigen Komponente eines Überzugsmittels aufgebrachten Überzugsschicht mit einem oder mehreren optischen Meßgeräten, bei dem man die Überzugsschicht auf die äußere Oberfläche eines über eine Antriebsrolle und eine oder mehrere Spannrollen gespannten Trägerbandes aufbringt und danach die berührungsfreie optische Messung an der Überzugsschicht an einer planen, nicht gekrümmten Stelle auf der Außenseite des Trägerbandes durchführt, das dadurch gekennzeichnet ist, dass das Trägerband in sich geschlossen ist und sich während des Aufbringens der Überzugsschicht in Umlaufbewegung befindet und sich während der Messung in einer Umlaufbewegung befinden kann.
Im erfindungsgemäßen Verfahren wird zunächst eine Überzugsschicht aus einem flüssigen Überzugsmittel auf ein über eine Antriebs- und eine oder mehrere, beispielsweise bis zu 3 Spannrollen gespanntes und umlaufendes (in sich geschlossenes) Trägerband aufgebracht. Die nachfolgende Beschreibung erläutert das erfindungsgemäße Verfahren an der Ausführungsform eines über eine Antriebsrolle und nur eine Spannrolle gespannten Trägerbandes. Für den Fachmann ist es klar, daß das Prinzip der vorliegenden Erfindung keineswegs auf diese Ausführungsform begrenzt ist.

Das Trägerband hat eine ebene äußere Oberfläche, es kann aus üblichen Materialien, beispielsweise aus Kunststoff, Gummi oder Metall bestehen. Beispielsweise kann es sich um eine Kunststoffolie oder um ein nahtlos geschweißtes Edelstahlband handeln. Die mit dem Überzugsmittel zu beschichtende Außenseite des Trägerbandes kann unvorbeschichtet und gegebenenfalls als reflektierende, beispielsweise spiegelnde Oberfläche ausgebildet sein, beispielsweise metallisiert sein oder sie kann, falls das Trägerband aus Metall besteht, poliert sein. Es ist auch möglich, daß die Außenseite des Trägerbandes eine ein- oder mehrschichtige Vorbeschichtung aufweist, beispielsweise eine ausgehärtete Grundierungs- oder Füllerschicht, wie sie beispielsweise bei dekorativen Mehrschichtlackierungen unterhalb von farb- und/oder effektgebenden Basislackschichten anzutreffen sind. Die Beschaffenheit der Trägerbandaußenseite richtet sich zweckmäßig nach der jeweiligen technischen Fragestellung, deren Beantwortung mithilfe des erfindungsgemäßen Verfahrens angestrebt wird. Je nach Zweckmäßigkeit kann das Trägerband nach Beendigung einer optischen Messung oder Meßreihe weggeworfen werden, beispielsweise wenn es aus einer preiswerten Kunststoffolie besteht, oder es wird gereinigt, beispielsweise mittels eines Abstreifers und/oder unter Zuhilfenahme von Reinigungsmitteln, beispielsweise organischen Lösemitteln.

Das Trägerband ist über eine Antriebsrolle und eine davon beabstandete Spannrolle gespannt, so daß die Trägerbandaußenseite zwischen den beiden Rollen eine plane, nicht gekrümmte Oberfläche ausbildet. Es ist vorteilhaft, daß die zwischen den beiden Rollen aufgespannte Oberfläche der Trägerbandaußenseite für die Zwecke des erfindungsgemäßen Verfahrens eine horizontale oder vertikale Position oder eine Position dazwischen einnehmen kann. Dies erhöht die Freiheitsgrade für die Durchführung des erfindungsgemäßen Verfahrens, Applikation und optische Messung können dann in allen Positionen durchgeführt werden. Beispielsweise können bei vertikaler Position der Trägerbandaußenseite optische Messungen durchgeführt werden, deren Ergebnis von der Schwerkraft beeinflußt werden kann, was beispielsweise insbesondere im Falle flüssiger Effektlacke der Fall sein kann. Alternativ oder ergänzend können optische Messungen bei horizontaler Position der Trägerbandaußenseite durchgeführt werden, beispielsweise wenn es erwünscht ist, den Einfluß der Schwerkraft auszuschließen oder wenn es sich um eine optische Messung handelt, bei der die Schwerkraft keinen Einfluß hat. Die Breite des Trägerbandes bzw. der Rollen beträgt zweckmäßig einige cm, beispielsweise von 3 bis 20 cm. Der Durchmesser der Rollen beträgt zweckmäßig ebenfalls einige cm, beispielsweise von 5 bis 10 cm. Der freie Raum oder Abstand zwischen den beiden Rollen beträgt zweckmäßig einige cm, beispielsweise von 10 bis 50 cm, entsprechend kann die Länge des Trägerbandes variiert werden.

Die Art der nach dem erfindungsgemäßen Verfahren auf das umlaufende Trägerband aufzubringenden flüssigen Überzugsmittel unterliegt keiner Beschränkung. Es kann sich um pigmenthaltige oder pigmentfreie flüssige Überzugsmittel handeln. Die flüssigen Überzugsmittel können lösemittelfrei, lösemittelhaltig oder wäßrig sein. Es kann sich um Ein- oder Mehrkomponentenlacke, beispielsweise auch einzelne Komponenten von Mehrkomponentenlacken handeln. Es kann sich um physikalisch trocknende oder chemisch vernetzende flüssige Überzugsmittel handeln. Im Zusammenhang mit der vorliegenden Erfindung schließt der Ausdruck "Überzugsmittel" auch als Bindemittel in flüssigen Überzugsmitteln verwendbare flüssige Bindemittel sowie zur Herstellung flüssiger Überzugsmittel geeignete flüssige Halbfabrikate ein. Beispiele für Bindemittel sind flüssige Bindemittel als solche, wäßrige oder nichtwäßrige Bindemittellösungen sowie wäßrige oder nichtwäßrige Bindemitteldispersionen oder -emulsionen. Beispiele für flüssige Überzugsmittel im engeren Sinne sind disperse Bestandteile enthaltende oder von dispersen Bestandteilen freie Klarlacke, farb- und/oder effektgebende Basislacke, Decklacke, Pigmentpasten und Füllerlacke. Das erfindungsgemäße Verfahren eignet sich insbesondere zur berührungsfreien Messung optischer Parameter an aus flüssigen Effektlacken aufgebrachten Überzugsschichten.

Die Beschichtung der Außenseite des über die Rollen gespannten und umlaufenden Trägerbandes mit dem flüssigen Überzugsmittel kann durch Walz- (Coilcoating) oder Spritzauftrag, bevorzugt aber durch den gerichteten Auftrag mittels eines Rakels, bevorzugt Kastenrakels oder einer Küvette erfolgen. Bevorzugt erfolgt der Auftrag des flüssigen Überzugsmittels auf die Außenseite des umlaufenden Trägerbandes an einer Position zwischen den Rollen, d.h. auf die plane, nicht gekrümmte Oberfläche des Trägerbandes. Der Auftrag mittels Rakel oder Küvette ist insbesondere bei der Applikation von effektgebenden Überzugsmitteln, wie beispielsweise Effektbasislacken bevorzugt. Die Verwendung eines Rakels ist bevorzugt bei der Beschichtung eines in horizontaler Richtung umlaufenden Trägerbandes, während für die Beschichtung eines in vertikaler Richtung umlaufenden Trägerbandes bevorzugt eine Küvette verwendet wird. Während das Rakel an seiner Unterseite eine spaltförmige Austrittsöffnung für das flüssige Überzugsmittel besitzt, bildet die Küvette an ihrer Unterseite zusammen mit der Außenseite des umlaufenden Trägerbandes eine spaltförmige Austrittsöffnung für das flüssige Überzugsmittel aus. Der Austrittsspalt der Küvette kann beispielsweise realisiert sein, indem der Boden der Küvette in dem erforderlichen Maß zurückgezogen ausgebildet wird oder indem die Küvette einen Austrittsspalt in ihrer der Außenseite des umlaufenden Trägerbandes zugewandten Seitenfläche besitzt. Das flüssige Überzugsmittel fließt durch den Austrittspalt des Rakels oder der Küvette auf das sich am Austrittspalt vorbeibewegende umlaufende Trägerband, wird auf dessen Außenseite gerichtet verteilt und bildet darauf einen geschlossenen Film aus, der in seiner Breite der Länge des Austrittsspalts entspricht.

Während der Beschichtung befindet sich das Trägerband in einer Umlaufbewegung mit einer Trägerbandvorschubgeschwindigkeit beispielsweise von 0,1 bis 2 m/s. Das Trägerband kann teilweise beschichtet werden, beispielsweise indem die Umlaufbewegung des Trägerbandes nach Applikation einer ausreichend langen Überzugsstrecke unterbrochen wird oder indem die Beschichtung zwar bei kontinuierlich umlaufendem Trägerband erfolgt, die aufgebrachte Überzugsschicht jedoch nach Durchlaufen einer definierten Umlaufstrecke entfernt wird, beispielsweise mittels einer Abstreifeinrichtung. Das Trägerband kann aber auch vollständig beschichtet werden, beispielsweise unter Durchlaufen eines einzigen vollständigen Umlaufs oder es wird kontinuierlich beschichtet, indem das beschichtete Trägerband während mehrerer Umläufe immer wieder die Auftragvorrichtung passiert. Letztere Variante kann insbesondere bei Verwendung einer Küvette als Auftragvorrichtung realisiert werden, wobei das in der Küvette befindliche flüssige Überzugsmittel mit dem schon aufgebrachten Überzugsmittel immer wieder in Kontakt kommen oder sich mit diesem vermischen kann.

Die berührungsfrei optisch zu vermessenden Überzugsschichten werden in einer Naßschichtdicke beispielsweise von 2 bis 200 µm auf die Außenseite des Trägerbandes aufgebracht. Die Naßschichtdicken können ober- oder unterhalb der Ablaufgrenze des betreffenden Überzugsmittels liegen. Im Falle der bevorzugten Applikationsweise mittels Rakel oder Küvette kann die gewünschte Schichtdicke durch entsprechende Auswahl der zusammenwirkenden Faktoren Vorschubgeschwindigkeit des Trägerbandes, Viskosität des flüssigen Überzugsmittels, definierte Spaltbreite des Rakels bzw. definierter Abstand der Küvette von der Oberfläche der zu beschichtenden Trägerbandaußenseite eingestellt werden. Die Vorschubgeschwindigkeit des Trägerbandes liegt beispielsweise bei 0,1 bis 2 m/s, die Viskosität des aufzutragenden flüssigen Überzugsmittels liegt bei üblichen Werten, beispielsweise im Bereich von 50 bis 2000 mPas. Die Spaltbreite des Rakels bzw. der Abstand der Küvette von der Oberfläche der zu beschichtenden Trägerbandaußenseite liegt beispielsweise bei 5 µm bis 1 mm. Die Schichtdicke kann beispielsweise von der gewünschten optischen Meßmethode abhängen. Wird beispielsweise ein Auftrag des Überzugsmittels in deckender Schichtdicke durchgeführt, so können die nachfolgenden optischen Messungen in Reflexion erfolgen. Je nach mit der durchzuführenden optischen Messung verfolgter technischer Fragestellung kann es zweckmäßig sein, die berührungsfreie optische Messung in Reflexion und Transmission durchzuführen, beispielsweise wenn ein transparent pigmentiertes Überzugsmittel optisch vermessen werden soll. Dann wird eine nichtdeckende Überzugsschicht aufgebracht und als Trägerband wird insbesondere eines mit einer reflektierenden Außenseite gewählt.

Das erfindungsgemäße Verfahren kann unter Temperieren der auf die Außenseite des Trägerbandes aufgebrachten Überzugsschicht durchgeführt werden. Beispielsweise kann durch Erwärmen ein bei erhöhter Temperatur stattfindender Ablüftprozeß simuliert werden. Beispielsweise kann das umlaufende Trägerband nach Beschichtung seiner Außenseite von der Außenseite (Vorderseite) und/oder Innenseite (Rückseite) her temperiert werden. Dies kann beispielsweise durch direkte Wärmeübertragung von der Innenseite des Trägerbandes her, beispielsweise mittels eines Peltier-Elementes erfolgen. Weitere Möglichkeiten der Wärmeübertragung sind die Verwendung eines warmen oder kalten Luftstroms und/oder Infrarotbestrahlung, wobei die Wärmeübertragung mittels dieser beiden Alternativen bevorzugt auf die beschichtete Außenseite des Trägerbandes erfolgt. Das Temperieren kann auf einem Teilabschnitt oder auf dem gesamten Trägerband erfolgen. Insbesondere bei Wärmeübertragung auf oder von einem Teilabschnitt des beschichteten Trägerbandes kann so vorgegangen werden, daß die Umlaufbewegung des Trägerbandes unterbrochen und nur ein Teilabschnitt des Trägerbandes der Wärmeübertragung ausgesetzt wird, oder daß das Trägerband während der Wärmeübertragung umläuft und die Wärmeübertragung nur auf oder vom jeweils gerade im Bereich der Wärmequelle oder Wärmesenke befindlichen Teilabschnitt des umlaufenden Trägerbandes erfolgt.

Im erfindungsgemäßen Verfahren werden nach der Applikation des flüssigen Überzugsmittels berührungsfrei optische Parameter an einer planen, nicht gekrümmten Stelle der auf der Außenseite des Trägerbandes ausgebildeten Überzugsschicht bestimmt. Die Überzugsschichten können unmittelbar nach ihrer Ausbildung oder erst nach einem gewissen Zeitraum, beispielsweise einer teilweise oder vollständig abgeschlossenen Ablüftphase optisch vermessen werden. In jedem Falle handelt es sich nicht um endgültig getrocknete, gehärtete oder vernetzte Überzugsschichten. Bevorzugt handelt es sich bei den Überzugsschichten, an denen die optischen Parameter bestimmt werden, um flüssige Überzugsschichten. Die optischen Messungen an der Oberfläche der Überzugsschicht können bei stillstehendem oder umlaufendem Trägerband durchgeführt werden. Das zur Messung der optischen Parameter eingesetzte optische Meßgerät wird der Auftragvorrichtung nachfolgend angeordnet. Diese nachfolgende Anordnung kann in unmittelbarer Nachbarschaft zur Auftragvorrichtung bestehen oder es kann eine größere Entfernung zwischen Auftragvorrichtung und optischem Meßgerät herrschen.

Das betreffende berührungsfrei arbeitende optische Meßgerät nimmt beispielsweise eine zur planen Meßoberfläche parallele Position ein mit einem äquidistanten Abstand der Meßöffnung von der Oberfläche der optisch zu vermessenden Überzugsschicht. Je nach Art und Bauprinzip des optischen Meßgeräts liegen die äquidistanten Abstände in Bereich von wenigen Millimetern bis mehreren Zentimetern, beispielsweise 2 mm bis 15 cm. Die optische Messung kann bei stillstehendem Trägerband durchgeführt werden. Im allgemeinen befindet sich das Trägerband während der optischen Messung jedoch in einer Umlaufbewegung. Insbesondere im Fall der optischen Messung an einem in vertikaler Position umlaufenden Trägerband kann es je nach mit der optischen Messung verfolgter technischer Fragestellung zweckmäßig sein, die Umlaufbewegung im oder gegen den Uhrzeigersinn zu führen, d.h. die optisch zu vermessende Überzugsschicht während der optischen Messung in Richtung der Schwerkraft oder entgegen der Schwerkraft zu bewegen. Somit kann man von der Schwerkraft beeinflusste und sich auf das Ergebnis der optischen Messung auswirkende Phänomene, wie beispielsweise Effektpigmentausrichtung oder Ablaufverhalten verstärken oder abschwächen.

Die optischen Messungen können unmittelbar nach dem Auftrag des Überzugsmittels auf das Trägerband erfolgen, d.h. das optische Meßgerät kann in unmittelbarer Nachbarschaft nach der Auftragvorrichtung angeordnet sein. Es kann aber auch eine größere Entfernung zwischen Auftragvorrichtung und optischem Meßgerät herrschen. Dies kann sich nach der Art der mit dem erfindungsgemäßen Verfahren zu beantwortenden jeweiligen technischen Fragestellung richten. Soll beispielsweise zwischen Auftrag und optischer Messung ein gewisser Zeitraum liegen, beispielsweise um einen Ablüftprozeß zu simulieren und dessen Einfluß auf das Ergebnis der optischen Messung festzustellen, so kann das optische Meßgerät in einem entsprechend größeren Abstand hinter der Auftragvorrichtung angeordnet sein. Das umlaufende Trägerband muß dann eine entsprechende Wegstrecke überwinden, bevor die optische Messung erfolgen kann. Alternativ kann eine Verzögerung zwischen Applikation des flüssigen Überzugsmittels und optischer Messung erreicht werden, indem die optische Messung erst nach mehr als einem vollständigen Umlauf des beschichteten Trägerbandes vorgenommen wird oder der Umlauf des beschichteten Trägerbandes unterbrochen wird mit nachfolgender optischer Messung zum gewünschten Zeitpunkt.

Bei der optischen Messung kann es sich um eine einzelne Messung oder um mehrere Messungen handeln, die jeweils an der aus einem konkreten flüssigen Überzugsmittel applizierten Überzugsschicht durchgeführt werden. Im Fall einer Mehrfachmessung kann es sich um die Bestimmung eines Mittelwertes handeln oder es handelt sich um die Charakterisierung eines dynamischen Vorgangs, beispielsweise die Veränderung optischer Parameter während eines Ablüftvorgangs, durch mehrere optische Messungen während eines definierten Zeitraums.

Weiterhin kann das erfindungsgemäße Verfahren so durchgeführt werden, daß die optischen Messungen im Sinne von online-Messungen durchgeführt werden. Dazu wird die Auftragvorrichtung kontinuierlich mit flüssigem Überzugsmittel beschickt, beispielsweise durch kontinuierliche Probenzufuhr aus einer laufenden Produktion. Das umlaufende Trägerband wird kontinuierlich beschichtet, die optische Messung kontinuierlich durchgeführt, das Trägerband hinter dem Meßort kontinuierlich von der Überzugsschicht befreit und beim erneuten Passieren der Auftragvorrichtung erneut beschichtet.

Beispiele für im erfindungsgemäßen Verfahren durchführbare optische Messungen sind die Bestimmung von Glanz, Glanzschleier (Haze), Oberflächenstruktur und Farbton, der sich wiederum aus dem Farbort, der Helligkeit und der Farbstärke zusammensetzt. Zur Durchführung der optischen Messungen werden übliche dem Fachmann bekannte optische Meßgeräte eingesetzt, die so dimensioniert sind, daß sie zur Durchführung der optischen Messung an der Überzugsschicht auf der Trägerbandaußenseite geeignet sind. Zur Veranschaulichung sei auf die vorstehend beispielhaft angegebenen Bereiche für die Breite des Trägerbandes, den Abstand zwischen den Rollen und die Rollendurchmesser hingewiesen.

Beispiele für im Rahmen des erfindungsgemäßen Verfahrens einsetzbare Verfahren zur Messung des Glanzes von Oberflächen sind die üblichen, dem Fachmann bekannten, auf dem Prinzip der Lichtreflexion basierenden goniophotometrischen Verfahren. Im Rahmen des erfindungsgemäßen Verfahrens bevorzugt eingesetzte Glanzmeßgeräte sind handelsübliche Geräte, wie beispielsweise die von der Firma BYK-Gardner vertriebenen Geräte Microgloss^{R} und Micro-Tri-Gloss^{R}.

Beispiele für im Rahmen des erfindungsgemäßen Verfahrens einsetzbare Verfahren zur Messung des Glanzschleiers (Haze) von Oberflächen sind die üblichen, dem Fachmann bekannten, ebenfalls auf dem Prinzip der Lichtreflexion basierenden goniophotometrischen Verfahren. Es können die handelsüblichen, dem Fachmann geläufigen Meßgeräte eingesetzt werden. Ein im Rahmen des erfindungsgemäßen Verfahrens bevorzugt eingesetztes Meßgerät zur Bestimmung des Glanzschleiers ist beispielsweise das von der Firma BYK-Gardner vertriebene Gerät Microhaze^{R}.

Ein Beispiel für ein im Rahmen des erfindungsgemäßen Verfahrens einsetzbares Verfahren zur Bestimmung des langwelligen und des kurzwelligen Anteils der Oberflächenstruktur von Oberflächen ist das dem Fachmann bekannte auf dem Prinzip der durch Oberflächenstrukturen modulierten Lichreflexion basierende goniophotometrische Verfahren. Es können alle üblichen, dem Fachmann geläufigen Meßgeräte verwendet werden. Beispielsweise wird beim erfindungsgemäßen Verfahren bevorzugt das von der Firma BYK-Gardner vertriebene Meßgerät Wavescan^{R} (vgl. European Coatings Journal Nr. 1-2 (1995), Seite 32-35) eingesetzt.

Beispiele für im Rahmen des erfindungsgemäßen Verfahrens einsetzbare Verfahren zur Farbmetrik von Oberflächen sind die üblichen, dem Fachmann bekannten Verfahren zur Bestimmung der Reflexionskurven von Licht, woraus sich z.B. die im CIELAB-System gebräuchlichen farbmetrischen Größen L*, a* und b* errechnen lassen. Es können alle üblichen, dem Fachmann geläufigen Meßgeräte verwendet werden. Ein im Rahmen des erfindungsgemäßen Verfahrens beispielsweise bevorzugt eingesetztes farbmetrisches Meßgerät ist das von der Firma X-Rite vertriebene Gerät X-Rite MA 68, ein beispielsweise bevorzugt eingesetztes Meßgerät zur Bestimmung der Helligkeit ist das von der Firma BYK-Gardner vertriebene Gerät Micrometallic^{R}.

Viele der optischen Messungen werden mit Meßgeräten durchgeführt, die einen Beleuchtungsstrahl aussenden und die Messung beispielsweise am reflektierten Strahl ausführen; diese Geräte haben daher eine Beleuchtungsrichtung, aus der beleuchtet wird, und eine dazu entgegengesetzte Betrachtungsrichtung (Meßrichtung). Es ist bevorzugt, wenn die Beleuchtungs- und/oder Betrachtungsrichtung ungeachtet des für die Messung gewählten Beleuchtungs- und/oder Betrachtungswinkels in Richtung oder um 180 Grad entgegengesetzt zur Umlaufrichtung des Trägerbandes verläuft.

Das erfindungsgemäße Verfahren kann beispielsweise eingesetzt werden zur Erfassung und Charakterisierung des Verlaufs oder des Ablaufverhaltens von aus flüssigen Überzugsmitteln aufgebrachten Überzugsschicht unter Einsatz von Verfahren zur Bestimmung des langwelligen und/oder kurzwelligen Anteils der Oberflächenstruktur lackierter Oberflächen, insbesondere durch Einsatz des vorstehend erwähnten Meßgeräts Wave-scan^{R}.

Weiterhin kann das erfindungsgemäße Verfahren unter Einsatz farbmetrischer Methoden sowie Methoden zur Bestimmung der Helligkeit beispielsweise genutzt werden zur Erfassung und Charakterisierung der Deckfähigkeit, des Farbtons, des Helligkeitsflops, des Farbflops, der Wolkigkeit von aus flüssigen Überzugsmitteln aufgebrachten Überzugsschichten und beispielsweise im Falle pigmentierter, insbesondere von aus effektgebenden Flüssigüberzugsmitteln aufgebrachten Überzugsschichten auch zur Erfassung und Charakterisierung des Ablaufverhaltens.

Das erfindungsgemäße Verfahren kann unter Einsatz von Glanzmeßmethoden beispielsweise genutzt werden zur Erfassung und Charakterisierung des Glanzes von aus flüssigen Überzugsmitteln aufgebrachten Überzugsschichten.

Das erfindungsgemäße Verfahren kann unter Einsatz von Methoden zur Bestimmung des Glanzschleiers beispielsweise genutzt werden zur Erfassung und Charakterisierung der Trübung oder Transparenz von aus flüssigen Klarlacken oder transparent pigmentierten flüssigen Überzugsmitteln aufgebrachten Überzugsschichten.

Die Auswertung der optischen Messungen kann rechnergestützt erfolgen. Die ermittelten optischen Parameter können beispielsweise mit den entsprechenden Werten einer Vorlage, z.B. eines Freigabemusters, verglichen werden. Beispielsweise können die entsprechenden optischen Parameter der Vorlage in analoger Weise unter Anwendung der erfindungsgemäßen Verfahrensweise bestimmt werden.

Das erfindungsgemäße Verfahren ist vielseitig einsetzbar, beispielsweise im Bereich der Entwicklung, Standardisierung, Produktion und Kontrolle flüssiger Überzugsmittel. Beispielsweise kann das erfindungsgemäße Verfahren eingesetzt werden bei der Überprüfung der Lager- oder Ringleitungsstabilität flüssiger Überzugsmittel, bei der Qualitätskontrolle oder Endfreigabe in der Produktion flüssiger Überzugsmittel, beim Tönen pigmentierter flüssiger Überzugsmittel oder bei der Wareneingangsprüfung flüssiger Überzugsmittel.

Das erfindungsgemäße Verfahren kann aber auch eingesetzt werden bei der Untersuchung des Verhaltens flüssiger Überzugsmittel nach ihrer Applikation. Beispielsweise kann die Abhängigkeit der erhaltenen optischen Meßwerte von der Führung eines Ablüftprozesses untersucht werden. Ebenso kann beispielsweise die zeitliche Veränderung optischer Meßwerte in Abhängigkeit von den nach der Applikation eines flüssigen Überzugsmittels herrschenden Bedingungen untersucht werden. Das erfindungsgemäße Verfahren kann damit auch als wertvolles Werkzeug bei der Entwicklung von Lackierverfahren genutzt werden.

Ebenso ist eine Anwendung des erfindungsgemäßen Verfahrens beispielsweise auch im Bereich der Druckfarben möglich. Das erfindungsgemäße Verfahren sowie die Vorrichtung zur Durchführung des Verfahrens sind natürlich prinzipiell auch in beliebigen anderen Anwendungsbereichen anwendbar, wo generell optische und insbesondere farbmetrische Messungen an farbigen flüssigen Medien erforderlich sind.

Die Erfindung betrifft auch eine Vorrichtung zur Durchführung des erfindungsgemäßen Verfahrens, bestehend aus einem über eine Antriebsrolle und eine oder mehrere Spannrollen gespannten Trägerband mit einer Auftragsvorrichtung für flüssiges Überzugsmittel und einem oder mehreren der Auftragsvorrichtung nachfolgend angeordneten berührungsfrei arbeitenden optischen Meßgeräten, die parallel zur und äquidistant über der planen Oberfläche des Trägerbandes zwischen den Antriebs- und Spannrollen angeordnet sind, die dadurch gekennzeichnet ist, daß das Trägerband in sich geschlossen ist.

Nachfolgend wird die erfindungsgemäße Vorrichtung an der Ausführungsform eines über eine Antriebsrolle und nur eine Spannrolle gespannten Trägerbandes erläutert. Für den Fachmann ist es offensichtlich, daß die erfindungsgemäße Vorrichtung keineswegs auf diese Ausführungsform begrenzt ist, sondern daß die Vorrichtung insbesondere auch mehr als eine Spannrolle aufweisen kann.

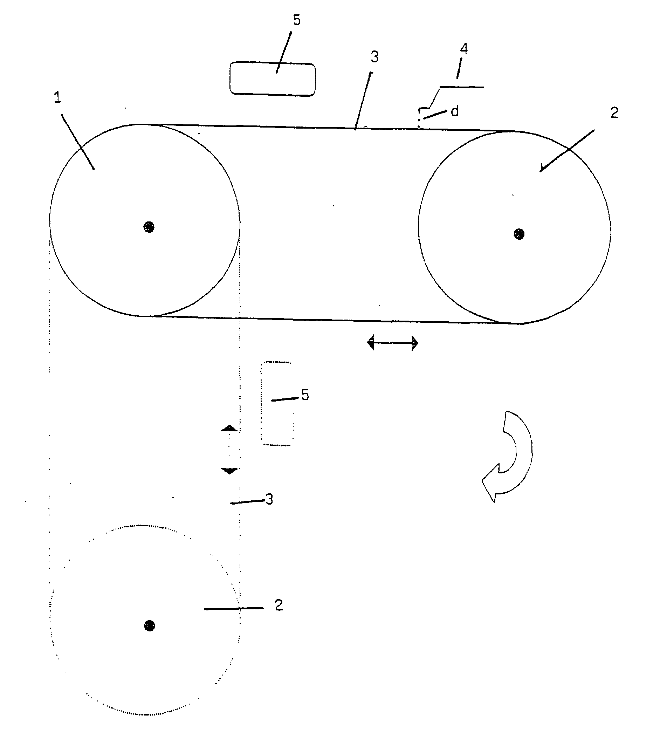

Figur 1 ist eine schematische Darstellung einer Ausführungsform der erfindungsgemäßen Vorrichtung, die zur Durchführung des erfindungsgemäßen Verfahrens geeignet ist. Diese besteht aus einer Rolle 1 und einer Rolle 2, wovon eine als Antriebsrolle und die andere als Spannrolle dient, um die ein Trägerband 3 gespannt ist. Die Anordnung befindet sich in einer vertikalen Position (Darstellung mit durchgezogener Linie), kann aber komplett in eine horizontale Position (Darstellung mit gepunkteter Linie) geschwenkt werden (dargestellt durch den gekrümmten Pfeil). Die Anordnung kann also in der vertikalen Position und auch in der horizontalen Position betrieben werden. Das Trägerband kann - wie durch den Doppelpfeil dargestellt - im oder gegen den Uhrzeigersinn umlaufend bewegt werden.

Dargestellt ist eine Auftragvorrichtung in Form einer mit flüssigem Überzugsmittel befüllbaren Küvette 4, die einen durch ihren Abstand d von der Trägerbandaußenseite definierten Auftragsspalt für das Überzugsmittel ausbildet. In der Anordnung der schematischen Darstellung der Figur 1 bedingt die Küvette selbstverständlich eine Umlaufbewegung des Trägerbandes während der Beschichtung entgegen dem Uhrzeigersinn. Weiterhin dargestellt ist ein der Küvette nachfolgend angeordnetes, parallel (äquidistant) zur planen, beschichteten Trägerbandaußenseite ausgerichtetes berührungsfrei arbeitendes optisches Meßgerät 5. Das entgegen dem Uhrzeigersinn umlaufende Trägerband kann mit seiner Außenseite die mit flüssigem Überzugsmittel gefüllte Küvette passieren und kann dabei mit einer flüssigen Überzugsschicht versehen werden, deren Oberfläche bei Passieren des optischen Meßgeräts optisch vermessen werden kann.

Mit dem erfindungsgemäßen Verfahren lassen sich optische Parameter schnell, effektiv und mit ausreichender Genauigkeit an aus flüssigen Überzugsmitteln aufgebrachten Überzugsschichten mithilfe an sich bekannter berührungsfreier optischer Meßverfahren bestimmen. Das erfindungsgemäße Verfahren ist einfach durchführbar und führt zu reproduzierbaren Ergebnissen. Es besticht durch seine vielfältigen Einsatzmöglichkeiten und durch die große Variabilität bei seiner Durchführung. Insbesondere erlaubt es die Durchführung der optischen Messungen mit und ohne Einfluß der Schwerkraft. Die optischen Messungen können als Einzelmessung, als Mehrfachmessung, beispielsweise zur Charakterisierung dynamischer Vorgänge sowie auch als online-Messungen durchgeführt werden.

## Patentansprüche

1. Verfahren zur berührungsfreien Messung optischer Parameter an einer planen, aus einem flüssigen Überzugsmittel oder einer flüssigen Komponente eines Überzugsmittels aufgebrachten Überzugsschicht mit einem oder mehreren optischen Meßgeräten, bei dem man die Überzugsschicht auf die äußere Oberfläche eines über eine Antriebsrolle und eine oder mehrere Spannrollen gespannten Trägerbandes aufbringt und danach die berührungsfreie optische Messung an der . Überzugsschicht an einer planen, nicht gekrümmten Stelle auf der Außenseite des Trägerbandes durchführt, **dadurch gekennzeichnet, dass** das Trägerband in sich geschlossen ist und sich während des Aufbringens der Überzugsschicht in Umlaufbewegung befindet und sich während der Messung in einer Umlaufbewegung befinden kann.

2. Verfahren nach Anspruch 1, **dadurch gekennzeichnet, daß** die Messung an einer im flüssigen Zustand befindlichen Überzugsschicht durchgeführt wird.

3. Verfahren nach Anspruch 1 oder 2, **dadurch gekennzeichnet, daß** die Messung nach einer Ablüftphase oder nach einer teilweisen Trocknung oder teilweisen Härtung der Überzugsschicht durchgeführt wird.

4. Verfahren nach Anspruch 1, 2 oder 3, **dadurch gekennzeichnet, daß** sich das Trägerband während der Messung in horizontaler oder vertikaler Lage befindet.

5. Verfahren nach einem der Ansprüche 1 bis 4, **dadurch gekennzeichnet, daß** die Messung unter Verwendung eines Trägerbandes mit reflektierender äußerer Oberfläche durchgeführt wird.

6. Verfahren nach einem der vorhergehenden Ansprüche, **dadurch gekennzeichnet, daß** die optische Messung zur Bestimmung von Glanz, Glanzschleier (Haze), Oberflächenstruktur und/oder Farbton jeweils unter Verwendung von üblichen für diese Messungen geeigneten optischen Meßgeräten durchgeführt wird.

7. Verfahren nach einem der Ansprüche 1 bis 6, **dadurch gekennzeichnet, daß** es an einer aus einem flüssigen Effektlack aufgebrachten Überzugsschicht durchgeführt wird.

8. Vorrichtung zur Durchführung des Verfahrens nach einem der Ansprüche 1 bis 7, bestehend aus einem über eine Antriebsrolle (1 oder 2) und eine oder mehrere Spannrollen (2 oder 1) gespannten Trägerband (3) mit einer Auftragsvorrichtung (4) für flüssiges Überzugsmittel und einem oder mehreren der Auftragsvorrichtung nachfolgend angeordneten berührungsfrei arbeitenden optischen Meßgeräten (5), die parallel zur und äquidistant über der planen Oberfläche des Trägerbandes (3) zwischen den Antriebs- und Spannrollen (1, 2) angeordnet sind, **dadurch gekennzeichnet, dass** das Trägerband (3) in sich geschlossen ist.

9. Vorrichtung nach Anspruch 8, **dadurch gekennzeichnet, daß** das Trägerband (3) von der Horizontalen in die Vertikale, und umgekehrt schwenkbar ausgebildet ist.

## Claims

1. A method for the contactless measurement of optical parameters on a plane coating layer applied from a liquid coating composition or a liquid component of a coating composition using one or more optical measuring instruments, in which method the coating layer is applied onto the outer surface of a support web tensioned over a drive roller and one or more tensioning rollers and then the contactless optical measurement is performed on the coating layer at a plane, uncurved point on the outside of the support web, **characterised in that** the support web is continuous and is in circulating motion during application of the coating layer and may be in circulating motion during the measurement.

2. A method according to claim 1, **characterised in that** the measurement is performed on a coating layer which is in a liquid state.

3. A method according to claim 1 or 2, **characterised in that** the measurement is performed after a flash-off phase or after partial drying or partial curing of the coating layer.

4. A method according to claim 1, 2 or 3, **characterised in that** the support web is in a horizontal or vertical position during the measurement.

5. A method according to any one of claims 1 to 4, **characterised in that** the measurement is performed using a support web with a reflective outer surface.

6. A method according to any one of the preceding claims, **characterised in that** the optical measurement is performed in order to determine gloss, haze, surface texture and/or colour shade, in each case using suitable optical measuring instruments conventional for these measurements.

7. A method according to any one of claims 1 to 6, **characterised in that** it is performed on a coating layer applied from a liquid special-effect finish.

8. An apparatus for performing the method according to any one of claims 1 to 7, consisting of a support web (3) tensioned over a drive roller (1 or 2) and one or more tensioning rollers (2 or 1) with a liquid coating composition application apparatus (4) and one or more contactlessly operating optical measuring instruments (5) arranged downstream from the application apparatus, which optical measuring instruments are arranged parallel to and equidistantly over the plane surface of the support web (3) between the drive and tensioning rollers (1, 2), **characterised in that** the support web (3) is continuous.

9. An apparatus according to claim 8, **characterised in that** the support web (3) is constructed so as to be pivotable from the horizontal to the vertical and vice versa.

## Revendications

1. Procédé de mesures sans contact de paramètres optiques sur une couche plane de revêtement, appliquée avec un agent liquide de revêtement ou un composant liquide d'un agent de revêtement, par un ou plusieurs instruments de mesures optiques, dans lequel la couche de revêtement est appliquée sur la surface extérieure d'une bande de support tendue sur un rouleau moteur et un ou plusieurs galets tendeurs, et la mesure optique sans contact est ensuite réalisée sur la couche de revêtement sur une partie plane, non courbée sur le côté extérieur de la bande de support, le procédé étant **caractérisé en ce que** la bande de support est fermée sur elle-même et se trouve en mouvement de rotation pendant l'application de la couche de revêtement et peut se trouver en mouvement de rotation pendant la mesure.

2. Procédé selon la revendication 1, **caractérisé en ce que** la mesure est réalisée sur une couche de revêtement se trouvant à l'état liquide.

3. Procédé selon la revendication 1 ou 2, **caractérisé en ce que** la mesure est réalisée après une phase de ventilation ou après un séchage partiel ou un durcissement partiel de la couche de revêtement.

4. Procédé selon la revendication 1, 2 ou 3, **caractérisé en ce que** la bande de support se trouve en position horizontale ou verticale pendant la mesure.

5. Procédé selon une quelconque des revendications 1 à 4, **caractérisé en ce que** la mesure est réalisée en utilisant une bande de support comprenant une surface extérieure réfléchissante.

6. Procédé selon une quelconque des revendications précédentes, **caractérisé en ce que** la mesure optique pour la détermination de la brillance, du voile de réflexion (haze), de la structure de surface et/ou de la chrominance est dans chaque cas réalisée en utilisant des instruments habituels de mesures optiques adaptés à ces mesures.

7. Procédé selon une quelconque des revendications 1 à 6, **caractérisé en ce qu'**il est réalisé sur une couche de revêtement appliquée avec un vernis à effet.

8. Appareil pour la réalisation du procédé selon une quelconque des revendications 1 à 7, comprenant une bande de support (3) tendue sur un rouleau moteur (1 ou 2) et un ou plusieurs galets tendeurs (2 ou 1), un appareil d'application (4) pour un agent liquide de revêtement, et un ou plusieurs instruments (5) de mesures optiques, aménagés consécutivement à l'appareil d'application et fonctionnant sans contact, qui sont aménagés parallèlement à, et à distance égale au-dessus de, la surface plane de la bande de support (3) entre le rouleau moteur et le galet tendeur (1, 2), l'appareil étant **caractérisé en ce que** la bande de support (3) est fermée sur elle-même.

9. Appareil selon la revendication 8, **caractérisé en ce que** la bande de support (3) est façonnée avec liberté de pivotement de l'horizontale à la verticale et vice versa.
